# NEUE EUROPÄISCHE PATENTSCHRIFT

(11) **EP 0 645 875 B2**
(45) Veröffentlichungstag und Bekanntmachung des Hinweises auf die Entscheidung über den Einspruch: **03.01.2001**
(45) Hinweis auf die Patenterteilung: 26.04.1995
(21) Anmeldenummer: 93114443.0
(22) Anmeldetag: 08.09.1993
(51) Int. Cl.: H02K 23/66, H02K 5/10

(54) **Motor-Pumpen-Aggregat, insbesondere Kraftfahrzeug-Antiblockier-Bremsvorrichtung**
Motor-pump set, in particular antiblocking brake device for automotive vehicles
Groupe moto-pompe, en particulier dispositif d'antiblocage de frein pour véhicules automobiles

(43) Veröffentlichungstag der Anmeldung: 29.03.1995
(73) Patentinhaber: SIEMENS AKTIENGESELLSCHAFT, 80333 München (DE)
(72) Erfinder: Deynet, Rolf, Dipl.-Ing., D-97074 Würzburg (DE)

(56) Entgegenhaltungen:
- EP-A- 0 413 849
- EP-A- 0 432 283
- EP-A- 0 472 746
- EP-A- 0 489 077
- EP-B- 0 256 389
- WO-A-93/05050
- WO-A-94/27045
- DE-A- 3 142 151
- DE-A- 3 642 726
- JP-A- 4 123 376
- JP-U- 4 123 376
- PATENT ABSTRACTS OF JAPAN vol. 9, no. 318 (E-366)(2041) 13. Dezember 1985 & JP-A-60 152 247 (TOSHIBA)

## Beschreibung

Die Erfindung bezieht sich auf ein Motor-Pumpen-Aggregat, insbesondere eine Kraftfahrzeug-Antiblokkier-Bremsvorrichtung, gemäß Anspruch 1.

Durch die EP-A1-0 472 746 ist ein Kommutatormotor mit einem tiefgezogenen topfförmigen Gehäuse bekannt, an dessen kommutatorseitigem Topfrand ein gegossenes Lagerschild festschraubbar ist, das einen stirnseitig vorstehenden angegossenen hohlzylinderförmigen Lagerhals aufweist, der innen ein Rotorwellen-Kugellager aufnimmt und außen zum Aufstekken einer Flanschöffnung einer anzutreibenden Hydraulikpumpe ausgebildet ist. In einem topfbodenseitigen Lagerhals ist die Rotorwelle außerdem über ein Kalottenlager drehbar gelagert. Von der Topfbodenstirnseite des Motorgehäuses her ist eine Kunststoff-Abdeckkappe mit einem das Motorgehäuse axial außen teilweise übergreifenden Kabelkanal aufgesteckt, durch den eine kommutatorseitig durch eine Motorgehauseöffnung abgedichtet nach außerhalb des Aggregats herausgeführte äußere Anschlußleitung zu einem isoliert in der Stirnseite der topfförmigen Kunststoff-Abdeckkappe gehaltenen Kundenstecker geführt ist.

Es ist darüberhinaus bereits vorgeschlagen worden, an der dem Motorgehäuse abgewandten Stirnfläche des Pumpengehäuses ein Elektronikgehäuse anzuordnen, das eine, insbesondere von einer Leiterplatte gehaltene bzw. kontaktierte elektrische bzw. elektronische Versorgungs-Steuervorrichtung aufnimmt, die über elektrische Versorgungs- bzw. Steuerleitungen mit elektrischen Bauteilen in dem Motorgehäuse, insbesondere mit der innerhalb des Motorgehäuses angeordneten Bürstenplatte eines als Motor vorgesehenen Kollektormotors, zu verbinden sind.

Durch die WO 93/08050 ist ein elektrohydraulisches Aggregat zur Druckregelung in Bremsanlagen von Fahrzeugen mit einem Hydraulik-Pumpenblock bekannt, an dessen einer axialen Stirnfläche eine topförmige Abdeckhaube zum Schutz von Elektromagneten, Relais und einer Kontaktfolie randseitig dichtend anliegt, und vor deren anderen Stirnseite ein Elektromotor zum Antrieb von Fluidpumpen angebaut ist; durch eine Aussparung der Kontaktfolie führt eine Anschlußlitze für den Elektromotor durch den Hydraulikblock zu dessen anderem axialen Ende und ist über einen Steckeranschluß an eine Verbindungsleitung zu dem Elektromotor angeschlossen, die zunächst am Außenumfang von dessen Motorgehäuse und dann durch dieses hindurch in dessen Innenraum verläuft.

Gemäß Aufgabe vorliegender Erfindung soll ein Motor-Pumpen-Aggregat, insbesondere für eine Kraftfahrzeug-Antiblockier-Bremsvorrichtung, mit elektrischen Verbindungsleitern zwischen dem Inneren des Motorgehäuses einerseits und dem Inneren des Elektronikgehäuses andererseits geschaffen werden, für das mit einfachen fertigungs- und montagetechnischen Mitteln ein voller Schutz gegen das Eindringen von Feuchtigkeit gewährleistet werden kann; die Lösung dieser Aufgabe gelingt erfindungsgemäß durch die Lehre des Anspruchs 1; vorteilhafte Ausgestaltungen der Erfindung sind jeweils Gegenstand der Unteransprüche.

Durch das erfindungsgemäße Verlegen der Vebindungsleiter zwischen dem Motorgehäuse einerseits und dem Elektronikgehäuse andererseits durch das Innere von Motorgehäuse und Pumpengehäuse sowie Elektronikgehäuse und durch Durchführungen in den dicht voreinanderliegenden Stirnflächen der axial hintereinander angeordneten Gehäuse kann auf komplizierte und schwierig abzudichtende Herausführungen der Verbindungsleiter aus der in der Regel nicht ebenen Mantelfläche des Motorgehäuses nach außerhalb des Aggregates, auf das Verlegen der Verbindungsleiter entlang des äußeren Umfangs des Aggregates und das Wiedereinführen in das Elektronikgehäuse verzichtet werden. Die voreinanderliegenden Stirnflächen sind durch zwischenliegende umlaufende Dichtungen gegeneinander derart abgedichtet, daß die elektrischen Verbindungsleiter radial innerhalb der umlaufenden Dichtung durch die voreinanderliegenden Stirnflächen des Motorgehäuses bzw. Pumpengehäuses bzw. Elektronikgehäuses hindurchgeführt sind.

Ist für eines der Gehäuse ein weicheres Material als für das andere gegenliegende Gehäuse vorgesehen, so kann eine Abdichtung zwischen den beiden voreinanderliegenden Stirnflächen dadurch auf einfache Weise verbessert werden, daß an die Stirnfläche des Gehäuses mit dem härteren Material ein umlaufender vorstehender Kragen angeformt ist, der sich beim Gegendrücken, z.B. bei einem gegenseitigen Verschrauben, des anderen Gehäuses in dessen Stirnfläche dichtend eindrückt.

Die Erfindung sowie weitere vorteilhafte Ausgestaltungen der Erfindung gemäß Merkmalen der Unteransprüche sind im folgenden anhand eines schematisch dargestellten Ausführungsbeispiels in der Zeichnung näher erläutert; darin zeigen:
- FIG 1: in einem axialen Längsschnitt ein Motor-Pumpen-Aggregat für eine Kraftfahrzeug-Antiblockier-Bremsvorrichtung mit axial hintereinander angeordnetem Motorgehäuse bzw. Pumpengehäuse bzw. Elektronikgehäuse,
- FIG 2: das Motorgehäuse gemäß FIG 1 im Schnittverlauf II-II.

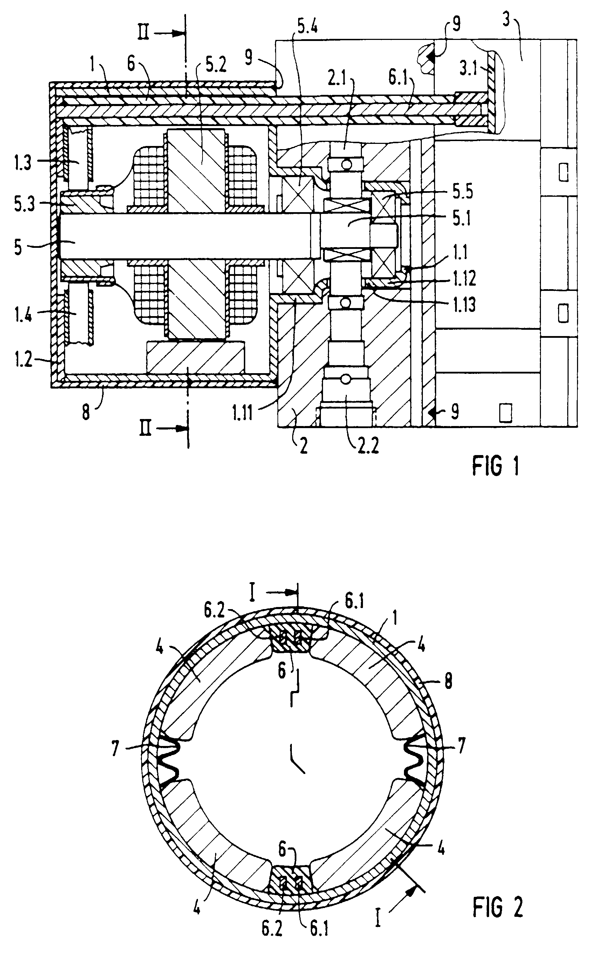

FIG 1 zeigt einen Kommutatormotor mit einem topfförmigen Motorgehäuse 1, in dessen Topfboden ein axial vorstehender Lagerhals 1.1 beim Tiefziehen miteingeformt ist. Am Innenumfang des Motorgehäuses 1 sind Magnetschalen 4 zur Erregung der in einem Rotorpaket 5.2 eingebrachten Rotorwicklung angeordnet. Die Rotorwicklung ist an einen Kommutator 5.3 angeschlossen, der im Bereich der Topfrandseite des Motorgehäuses 1 auf einer Rotorwelle 5 befestigt ist und über Bürsten 1.3;1.4 bestromt wird, die in einer motorgehäuseseitgen Bürstenplatte 1.2 gehalten bzw. geführt sind. An den Topfboden des topfförmigen Motorgehäuses 1 ist axial vorgelagert mit aneinanderliegenden Stirnseiten ein Pumpengehäuse 2 dichtend angeflanscht, in dem Pumpenstößel als Pumpenantriebsteile 2.1;2.2 einer Hochdruckpumpe für eine Brems-Hydraulikflüssigkeit angeordnet sind. Die Pumpenstößel 2.1;2.2 werden von einem Exzenter 5.1 der Rotorwelle 5 angetrieben.

Der Lagerhals 1.1 des Motorgehäuses 1 ragt axial derart in das an den Topfboden des Motorgehäuses 1 angeflanschte Pumpengehäuse 2 hinein, daß die gesamte Lagerung der Rotorwelle 5 sowie der Exzenter 5.1 in das Pumpengehäuse 2 eintauchen und somit die axiale Baulänge des Gesamt-Aggregats verkürzen. Der Lagerhals 1.1 weist dabei einen ersten Abschnitt 1.11 zur Aufnahme eines ersten Kugel-Lagers 5.4, einem demgegenüber mit geringerer radialer Weite versehenenen zweiten Abschnitt 1.12 für ein weiteres Kugel-Lager 5.5 für die Rotorwelle 5 und dazwischen einen mit Öffnungen für die Pumpenstößel 2.1;2.2 versehenen dritten Abschnitt 1.13 auf.

Zur fertigungs- und montagetechnisch einfachen Abdichtung der offenen Stirnseite des Motorgehäuses 1 ist in vorteilhafter Weise eine axial von dieser Stirnseite her auf das Motorgehäuse 1 aufgesteckte Kunststoff-Kappe 8 vorgesehen, deren topfrandseitige offene Stirnseite gegenüber dem anliegenden Pumpengehäuse 2 durch eine randseitige umlaufende, gleichzeitig auch die topfbodenseitige Stirnseite des Motorgehäuses 1 gegenüber dem Pumpengehäuse 2 abdichtende Dichtung 9 abgedichtet ist. Ein ähnliche umlaufende Abdichtung ist zwischen den voreinanderliegenden Stirnseiten von Pumpengehäuse 2 und Pumpengehäuse 3 durch eine weitere umlaufende Dichtung 9 vorgesehen.

Zur elektrischen Verbindung zwischen dem Motorgehäuse 1 einerseits und dem Elektronikgehäuse 3 andererseits sind erfindungsgemäß Verbindungsleiter 6.1;6.2 als elektrische Versorgungs- bzw. Steuerleitungen vorgesehen, die nur innerhalb des Motorgehäuses 1, des Pumpengehäuses 2 sowie des Elektronikgehäuses 3 verlaufen und dazu durch die voreinanderliegenden Stirnseiten von Motorgehäuse 1 und Pumpengehäuse 2 einerseits bzw. Pumpengehäuse 2 und Elektronikgehäuse 3 andererseits durchgeführt sind; die Durchführungen durch die voreinanderliegenden Stirnflächen liegen radial innerhalb der umlaufenden Dichtungen 9;9, derart daß auch die Durchführungen somit gegen ein Eindringen von äußerer Feuchtigkeit im Bereich der voreinanderliegenden Stirnflächen mit Sicherheit verhindert ist.

In fertigungs- und insbesondere montagetechnisch besonders günstiger Weise sind die elektrischen Verbindungsleiter 6.1;6.2 im Motorgehäuse 1 innerhalb axialer Distanzstücke 6 angeordnet, insbesondere eingespritzt, die zwischen tangential gegenüberliegenden Stirnseiten von am Innenumfang des Motorgehäuses 1 gehalterten Magnetschalen 4 fixiert sind.

In weiterer montagetechnischer Vereinfachung sind nach einer Ausgestaltung der Erfindung die die Verbindungsleiter 6.1;6.2 aufnehmenden Distanzstücke 6;6 im Sinne einer durch das Pumpengehäuse 2 führenden und in dem Elektronikgehäuse 3 mit einer elektrischen bzw. elektronischen Versorgungs- bzw. Steuervorrichtung kontaktierbaren Steckerverbindung verlängert bzw. ausgebildet; bei einem zum Antrieb vorgesehenen Kollektormotor mit einer die Bürsten 1.3;1.4 haltenden Bürstenplatte 1.2 einerseits und einem Elektronikgehäuse 3 mit einer darin angeordneten, die Bauteile und Verbindungen der elektrischen bzw. der elektronischen Versorgungs- bzw. Steuervorrichtung aufnehmenden Leiterplatte 3.1 sind die Verbindungsleiter 6.1;6.2 als direkte, bei einer axialen Aufbaumontage selbsttätig kontaktierbare Verbindungen zwischen der Bürstenplatte 1.2 und der Leiterplatte 2.1 ausgebildet.

## Patentansprüche

1. Motor-Pumpen-Aggregat, insbesondere Kraftfahrzeug-Antiblockier-Bremsvorrichtung, enthaltend in axialer Hintereinander anordnung ein Motorgehäuse (1), ein Pumpengehäuse (2) und ein Elektronikgehäuse (3) mit den Merkmalen:
a) Das Motorgehäuse (1) liegt mit seiner einen Stirnfläche dicht vor der einen Stirnfläche des Pumpengehäuses (2);
b) das Elektronikgehäuse (3) liegt mit seiner einen Stirnfläche dicht vor der anderen Stirnfläche des Pumpengehäuses (2) ;
c) die dicht voreinanderliegenden Stirnflächen sind durch zwischenliegende umlaufende Dichtungen (9;9) gegeneinander, insbesondere nach radial außen, abgedichtet;
d) durch Durchführungen in dem dicht voreinanderliegenden Stirnflächen führen - unter Verzicht von Herausfürhungen aus der Mantelflache des Motorgehäuses (1) und Wiedereinführunges in das Elektronikschäuse (3) vom äußeren Umfang hindurch das Pumpengehäuse (2) Verbindungsleiter (6.1;6.2) als elektrische Versorgungs- bzw. Steuerleitungen zwischen dem Inneren des Motorgehäuses (1) einerseits und dem Inneren des Elektronikgehäuses (3) andererseits;
e) die elektrischen Verbindungsleiter (6.1;6.2) verlaufen radial innerhalb der umlaufenden Dichtungen (9;9) durch die dicht voreinanderliegenden Stirnflächen des Motorgehäuses (1) und des Pumpengehäuse (2) sowie des Pumpengehäuses (2) und des Elektronikgehäuses (3).

2. Motor-Pumpen-Aggregat nach Anspruch 1 mit dem Merkmal:
f) Die elektrischen Verbindungsleiter (6.1;6.2) sind innerhalb des Motorgehäuses (1) in axialen Distanzstücken (6) verlegt, insbesondere eingespritzt, die zwischen tangential gegenüberliegender Stirnseiten von am Innenumfang des Motorgehäuses (1) gehaltenen Magnetschalen (4) fixiert sind.

3. Motor-Pumpen-Aggregat nach Anspruch 2 mit dem Merkmal
g) Zumindest die die Verbindungsleiter (6.1;6.2) aufnehmenden Distanzstücke (6) sind im Sinne einer durch das Pumpengehäuse (2) führenden und in dem Elektronikgehäuse (3) mit einer elektrischen bzw. elektronischen Versorgungsvorrichtung kontaktierbaren Steckerverbindung verlängert bzw. ausgebildet.

4. Motor-Pumpen-Aggregat nach einem der Ansprüche 1-3 mit dem Merkmal:
h) Die Verbindungsleiter (6.1;6.2) verbinden eine Bürstenplatte (1.2) in dem Motorgehäuse (1) einerseits mit einer Leiterplatte (3.1) in dem Elektronikgehäuse (3) andererseits.

## Claims

1. Motor-pump unit, preferably a motor-vehicle anti-lock brake device, comprising, in an axial series arrangement, a motor housing (1), a pump housing (2) and an electronics housing (3) with the following features:
a) the motor housing (1) lies with its one end surface tightly fitting in front of one end surface of the pump housing (2);
b) the electronics housing (3) lies with its one end surface tightly fitting in front of the other end surface of the pump housing (2);
c) the end surfaces, which lie tightly fitting one in front of the other, are sealed off from one another, preferably radially outwards, by interposed peripheral seals (9; 9);
d) connecting lines (6.1; 6.2) pass through bushings in the end surfaces, which lie tightly fitting one in front of the other - with leadthroughs from the circumferential surface of the motor housing (1) and reinsertions into the electronics housing (3) from the outer circumference through the pump housing (2) being omitted -, as electrical supply and control lines between the interior of the motor housing (1), on the one hand, and the interior of the electronics housing (3), on the other;
e) the electrical connecting lines (6.1; 6.2) run radially within the peripheral seals (9; 9) through the end surfaces, which lie tightly fitting one in front of the other, of the motor housing (1) and of the pump housing (2), as well as of the pump housing (2) and of the electronics housing (3).

2. Motor-pump unit according to Claim 1 having the following feature:
f) the electrical connecting lines (6.1; 6.2) are laid, preferably injection-moulded, within the motor housing (1) in axial spacers (6) which are fixed between tangentially opposite end sides of magnetic shells (4) held on the inner circumference of the motor housing (1).

3. Motor-pump unit according to Claim 2 with the following feature:
g) at least the spacers (6) which receive the connecting lines (6.1; 6.2) are extended or designed as a plug-type connector which passes through the pump housing (2) and can be contacted in the electronics housing (3) with an electrical or electronic supply device.

4. Motor-pump unit according to one of Claims 1-3 with the following feature:
h) the connecting lines (6.1; 6.2) connect a brush plate (1.2) in the motor housing (1), on the one hand, to a circuit board (3.1) in the electronics housing (3) on the other.

## Revendications

1. Groupe moto-pompe, notamment pour un dispositif de freinage à antiblocage d'un véhicule automobile, comportant, l'un derrière l'autre axialement, un carter (1) de moteur, un corps (2) de pompe et un boîtier (3) d'électronique, présentant les caractéristiques suivantes :
a) une des faces frontales du carter (1) de moteur (1) est juste en avant d'une face frontale du corps (2) de pompe;
b) une des faces frontales du boîtier (3) d'électronique est juste en avant de l'autre face frontale du corps (2) de pompe;
c) les faces frontales disposées juste l'une devant l'autre sont rendues étanches l'une par rapport à l'autre, notamment radialement en direction de l'extérieur, par des garnitures (9 ;9) d'étanchéité intermédiaires qui font le tour,
d) des conducteurs (6.1;6.2) électriques de liaison constituant des conducteurs électriques d'alimentation et de commande, s'étendant entre l'intérieur du carter (1) de moteur d'une part et l'intérieur du boîtier (3) d'électronique d'autre part, passent dans des passages ménagés dans les faces frontales disposées juste l'une devant l'autre, en renonçant à des sorties de la surface latérale du carter (1) de moteur et à des retours dans le boîtier (3) d'électronique à partir du pourtour extérieur en passant par le corps (2) de pompe.
e) les conducteurs (6.1;6.2) électriques de liaison s'étendent radialement à l'intérieur des garnitures (9;9) d'étanchéité qui font le tour en traversant les faces frontales, disposées juste l'une devant l'autre, du carter (1) de moteur et du corps (2) de pompe ainsi que du corps (2) de pompe et du boîtier (3) d'électronique.

2. Groupe moto-pompe suivant la revendication 1, ayant la caractéristique suivante :
f) les conducteurs (6.1;6.2) électriques de liaison sont posés, et notamment par moulage par injection, à l'intérieur du carter (1) de moteur, dans des entretoises (6) axiales, ces entretoises étant fixées entre des faces frontales, qui se font face tangentiellement, de coques (4) magnétiques maintenues sur le pourtour intérieur du carter (1) de moteur.

3. Groupe moto-pompe suivant la revendication 2, ayant la caractéristique suivante :
g) au moins les entretoises (6), de réception des conducteurs (6.1,6.2) de liaison, sont prolongées et agencées en vue d'une liaison à enfichage qui passe dans le corps (2) de pompe et qui peut être mis en contact avec un dispositif électrique et électronique d'alimentation dans le boîtier (3) d'électronique.

4. Groupe moto-pompe suivant l'une des revendications 1 à 3, ayant la caractéristique suivante :
a) les conducteurs (6.1;6.2) de liaison relient une plaque (1.2) de balais se trouvant dans le carter (1) de moteur d'une part à une plaquette à circuits imprimés (3.1) se trouvant dans le boîtier (3) d'électronique d'autre part.
